# EUROPÄISCHE PATENTSCHRIFT

(11) **EP 3 081 445 B1**
(45) Veröffentlichungstag und Bekanntmachung des Hinweises auf die Patenterteilung: **18.09.2019**
(21) Anmeldenummer: 16164120.4
(22) Anmeldetag: 06.04.2016
(51) Int. Cl.: B60T 17/22, B60T 7/16, B60T 7/18, B60T 13/66

(54) **BREMSPRÜFUNG VON GÜTERZÜGEN**
BRAKE TESTING OF FREIGHT TRAINS
VERIFICATION DES FREINS DES TRAINS DE MARCHANDISES

(30) Priorität: 08.04.2015 DE 102015004590
(43) Veröffentlichungstag der Anmeldung: 19.10.2016
(73) Patentinhaber: Franz Kaminski Waggonbau GmbH, 31785 Hameln (DE)
(72) Erfinder: Hartmann, Albert, 12247 Berlin (DE)
(74) Vertreter: Patentanwälte Thömen & Körner

(56) Entgegenhaltungen:
- EP-A1- 2 679 967
- EP-A1- 2 805 859
- EP-A2- 2 511 146
- US-A1- 2013 083 188
- US-A1- 2014 081 512
- US-A1- 2014 129 060
- US-A1- 2014 136 068
- US-A1- 2014 260 518

## Beschreibung

Die Erfindung betrifft ein Verfahren zur automatischen Bremsprüfung von Güterzügen und einer Vorrichtung zur Durchführung des Verfahrens.

### Hintergrund der Erfindung

Gemäß dem Allgemeinen Eisenbahngesetz (AEG) Teil C. Bau- und Betriebsrecht §35 Bremsen der Züge (7) ist eine Bremsprobe vorzunehmen, bevor ein mit durchgehender Bremse fahrender Zug den Anfangsbahnhof verlässt. Die Bremsprobe ist zu wiederholen, so oft der Führerstand gewechselt oder der Zug ergänzt oder getrennt wird, es sei denn, dass Fahrzeuge nur am Schluss abgehängt werden. Für Züge, die während mehrerer Fahrten unverändert bleiben, sind Ausnahmen zulässig.

Bei Güterzügen wird die Bremsprüfung wie folgt durchgeführt. Nachdem die Lokomotive mit dem Zugverband, bestehend aus einer Anzahl von Güterwagen verschiedenster Art, verbunden ist, wird zunächst die Dichtigkeit der Hauptbremsluftleitung durchgeführt. Dabei darf der Druckabfall nicht mehr als 0,5 bar innerhalb einer Minute betragen. Dieser Prozess wird alleinig vom Lokführer überwacht.

Danach folgt die eigentliche Bremsprobe. Ein Wagenmeister führt einen ersten Rundgang durch, bei dem der Zugverband geprüft wird, ob alle Bremsen ordnungsgemäß gelöst sind. Außerdem werden erkennbare Schäden aufgenommen sowie die Ladungssicherung überprüft. Nach Beendigung des ersten Rundgangs erteilt der Wagenmeister dem Lokomotivführer die Anweisung, die Bremsen des Zugverbandes anzulegen. Dann schreitet der Wagenmeister den Zugband zunächst auf der einen, und dann auf der anderen Seite ab und prüft, ob alle Bremsen ordnungsgemäß anliegen. Dann erteilt er dem Lokomotivführer die Anweisung, die Bremsen zu lösen. Er schreitet den Zugverband nochmals auf beiden Seiten ab und überzeugt sich davon, dass alle Bremsen ordnungsgemäß gelöst sind. Sofern noch nicht vorhanden, wird bei dieser Gelegenheit auch die Zugzusammenstellung aufgenommen sowie das Bremsgewicht des Zuges ermittelt, und daraus die Bremshundertstel berechnet. Die Bremshundertstel werden dazu benötigt, die Höchstgeschwindigkeit des Zuges den Streckenverhältnissen so anzupassen, dass der Zugverband sicher vor einem "rot" zeigenden Haltesignal zum Stillstand kommt. Sofern keine Probleme erkannt wurden, informiert der Wagenmeister den Lokomotivführer entsprechend und gibt den Zugverband zur Abfahrt frei. Der gesamt Vorgang kann bei zum Beispiel einem 700 Meter langen Güterzug je nach Witterungsverhältnissen mehrere Stunden dauern.

EP2805859 beschreibt eine Bremsprobe von Schienenfahrzeugen mit Druckluftbremse. Dafür wird ein als Kupplungskopf ausgebildetes mobiles Gerät verwendet. Dessen Werte werden mittels eines Kommunikationsmoduls auf ein einrichtungsfremdes Kommunikationsgerät, beispielsweise Funktelefon oder Tabletcomputer des Wagenmeisters / Visiteurs und des Lokomotivführers übertragen und können dort angezeigt und innerhalb des menügeführten Ablaufs als Istwerte festgehalten werden. Dabei kommuniziert der Kupplungskopf von der Hauptluftleitung des letzten Wagens aus beispielsweise per Bluetooth oder Wifi, alternativ auch über das konventionelle Netz mit den Kommunikationsgeräten z. B. Handheld mit adaptiertem Kartenleser / integrierter Kamera) des Wagenmeisters / Visiteurs und dem Lokomotivführer im Führerstand der Lokomotive.

PCT 009044 beschreibt ein Telematiksystem für Schienenfahrzeuge, mit dem der Produktionsfluss in Güterwaggon zwischen Hersteller und Abnehmer überwacht wird.

WO02/53438 beschreibt ein tragbares Diagnosesystem für ein Zugbremssystem. Das Diagnosesystem enthält einen tragbaren Analyser und ein Versorgungsventil, beide funkbasierend, sowie eine mobile Einheit, die mit ihnen kommuniziert. Das tragbare Diagnosesystem testet und diagnostiziert das Bremssystem, empfängt Daten des Bremssystems und zeigt sie auf einem Bildschirm an.

AT 511 269 A1 betrifft eine Vorrichtung zur automatischen Überwachung und Steuerung der pneumatischen Bremssysteme von Fahrzeugen, wobei die Vorrichtung ein, den Luftdruck der Bremssysteme durch Drucksensoren überwachendes Pneumatikmodul und ein damit verbundenes, ein oder mehrere Bremssysteme ansteuerndes Steuermodul umfasst. Das Steuermodul ist zum Empfang von Positionsdaten des Fahrzeugs ausgeführt. Diese Vorrichtung dient zur Überwachung der Bremssysteme von abgestellten Fahrzeugen und von im Schleppbetrieb befindlichen Fahrzeugen. Mittels einer GPRS-Datenverbindung kann die Vorrichtung Daten, wie Bremsdaten, Beschleunigung, Geschwindigkeit, Ort, an einen Server im Internet übermitteln und im Falle von Abhilfmaßnahmen Texte an den Triebfahrzeugführer senden.

US2014/811512 beschreibt ein System zur Prüfung des Bremssystems eines Zugverbandes. Es wird eine Kontrolleinrichtung für den Luftstrom, der zwischen Druckluftspeicher und Bremsleitung vorhanden ist, verwendet. Diese Kontrolleinrichtung umfasst einen programmierbaren Kontroller, ein tragbares Gerät sowie ein Zugendedruckmonitor. Die Druckverhältnisse in der Bremsleitung des Zugverbandes werden mittels einer Luftflussmethode (Air Flow Method) überprüft.

WO01/30632 beschreibt eine System, bei dem Fehlerprotokolle, die in einer Zugmaschine gespeichert sind, bei Wartungsarbeiten ausgelesen werden und vom Wartungszentrum zu einem dezentralen Server übermittelt werden.

Seit Jahren wird über eine kostengünstige Automatisierungslösung nachgedacht, um lange Standzeiten zu vermieden. Dies würde zu einer deutlichen Kostenreduzierung und Beschleunigung des Schienengüterverkehrs führen. Eine kostengünstige Lösung scheiterte bisher daran, dass Güterwagen im Gegensatz zu Reisezugwagen nicht elektrisch miteinander verbunden sind und auch an Bord des Güterwagens keine Stromversorgung existiert.

Der Erfindung liegt die Aufgabe zugrunde, ein Verfahren und eine Vorrichtung für die automatische Bremsprüfung von Güterzügen anzugeben.

Diese Aufgabe wird durch die im Anspruch 1 und Anspruch 9 angegebenen Merkmale gelöst.

Weiterbildungen und vorteilhafte Ausgestaltungen der Erfindung ergeben sich aus den weiteren Ansprüchen, der Beschreibung und der Zeichnung.

Erfindungsgemäß wird die Bremsprüfung eines Güterzugverbandes wie nachstehend beschrieben durchgeführt.

Der Lokomotivführer ruft mit einem Smartphone mit aktivierter GPS-Funktion oder einer vergleichbaren positionsbestimmenden Ausrüstung eine auf einem Zentralrechner gehostete Website auf, die dann interaktiv dem Lokomotivführer Anweisungen gibt, die Bremsprobe durchzuführen.

Beim Aufruf der Website wird dabei die vom Smartphone ermittelte GPS Position der Lokomotive dem Zentralrechner mitgeteilt. Die Website gibt nun dem Lokomotivführer nach einem festgelegten zeitlichen Ablauf vor, die Bremse mehrmals zu lösen und wieder zu anzulegen.

Die Wagen im Zugverband sind mit Drucksensoren oder Druckschaltern ausgestattet, die den Druck in der Hauptluftleitung und in dem Bremszylinder erfassen. Sofern der Wagen mit einer Handbremse ausgestattet ist, ist ein Endlageschalter vorhanden, der die Stellung der Feststellbremse signalisiert. Jeder Wagen ist mit einem Borddiagnosegerät ausgestattet, wie es zum Bespiel aus DE 10 2006 005 597 als Laufleistungszähler bekannt ist. Das Borddiagnosegerät ist internetfähig und ist ausgestattet mit einem GPS-Modul zur Bestimmung der GPS-Koordinaten. Ferner enthält das Borddiagnosegerät die Wagennummer. Das Borddiagnosegerät des Wagens erkennt das von dem Zentralrechner vorgegebene Bremsmuster.

In einer weiteren Ausgestaltung der Erfindung wird von dem Borddiagnosegerät die Geschwindigkeit des Wagens 0 km/h detektiert, um zu verhindern, dass ein zufällig auftretendes Bremsmuster im Fahrbetrieb zum Senden von Daten der Borddiagnosegeräte an den Zentralrechner führt. Dies geschieht vorzugsweise dadurch, dass in kurzem Abstand zweimal mittels GPS die Wagenposition ermittelt und verglichen wird. Alternativ können Drehzahlimpulse des Borddiagnosegeräts nach DE 10 2006 005 597 herangezogen werden.

Nach Abschluss des von dem Zentralrechner vorgegebenen Bremsmusters oder nach jeder Zustandsänderung der Bremsen und / oder sofern die Geschwindigkeit des Wagens 0 km/h detektiert ist, übermittelt das Borddiagnosegerät an den Zentralrechner die mittels GPS im Borddiagnosegerät ermittelte Position des Wagens sowie ein Protokoll der durchgeführten Bremsprobe. Das Protokoll enthält unter anderem Daten, ob der Druck in der Bremszylinderleitung nach Bremsanforderung vorhanden war und ob, sofern in dem Wagen vorhanden, die Feststellbremse gelöst ist sowie die Wagennummer. Der Zentralrechner wertet die Meldungen der einzelnen Wagen aus. Mit Hilfe der GPS-Daten kann die Wagenreihung erkannt werden. Nach Abschluss der Auswertung der Wagenmeldungen sendet der Zentralrechner die Wagenliste mit der Wagenreihung und dem Ergebnis der Bremsprobe an das auf der Lokomotive befindliche Smartphone und legt ein Protokoll zentral ab, bzw. sendet sie an das Eisenbahnverkehrsunternehmen, das den Zug befördert. Sofern sich im Zugverband Wagen befinden, die nicht mit der entsprechenden Ausrüstung, wie Drucksensor und Borddiagnosegeräts, versehen sind, werden dessen Daten vom Wagenmeister manuell nachgegeben und die Bremsprobe bei diesen Wagen wie bisher manuell durchgeführt. Sofern ein Wagen eine defekte Bremse hat, wird die Bremse abgeschaltet und die Daten des Wagens werden vom Wagenmeister manuell nachgegeben. Der Wagen kann jedoch vorzugsweise einen entsprechenden Zustands-Sensor besitzt, der die ausschaltete Bremse dem Borddiagnosegerät anzeigt. Ein solches Sensorsignal kann dem Protokoll des Borddiagnosegeräts hinzugewertet werden.

Damit sichergestellt wird, dass der Bremsbefehl bis zum letzten Wagen des Zuges durchgesteuert wird, da ja ein Absperrhahn versehentlich geschlossen sein könnte, kann an der Hauptluftleitung am Ende des Zuges ein Gerät zur Erkennung des Zugendes angebracht werden. Dieses mobile Gerät zur Überwachung der Hauptluftleitung enthält einen Sensor zur Erfassung der Anforderung des Befehls "Bremsprobe" sowie einen GPS-Empfänger mit Übermittlungsmöglichkeit der Daten an den Zentralrechner. Das Gerät gibt sich gegenüber dem Zentralrechner als "Zugende" zu erkennen. Alternativ könnte jedes Borddiagnosegerät zusätzlich mit einer Taste" letzter Wagen" ausgestattet sein. Der Wagenmeister betätigt dann bei seinem Rundgang um den Zug am Borddiagnosegerät des letzten Wagens die Taste "letzter Wagen". Dieses Signal wird anschließend im Protokoll des letzten Wagens im Rahmen der automatischen Bremsprobe mit übertragen.

Mit Abschluss der Auswertung der Wagenmeldungen ist im Zentralrechner die Wagenliste mit der Wagenreihung vorhanden. Das Borddiagnosegerät hat mit dem Protokoll über die durchgeführte Bremsprobe zusätzlich die im Borddiagnosegerät hinterlegte Wagennummer an den Zentralrechner übertragen. Diese Daten werden zur Ermittlung der Bremshundertstel herangezogen. Zur Ermittlung der Bremshundertstel greift der Zentralrechner auf eine hinterlegte Wagendatenbank zurück. In dieser Wagendatenbank sind alle relevanten Daten der Wagen hinterlegt. Der Zentralrechner holt sich von dieser Datenbank das hinterlegte Bremsgewicht der einzelnen Wagen. Wagen, die nur voll oder leer befördert werden, wie zum Beispiel Kesselwagen, können zusätzlich mit einem Sensor ausgestattet sein, der die Lage eines Ladezustandsschalters meldet. Bei Wagen, die individuell beladen sind, zum Beispiel Containertragwagen, wird das aktuelle Ladegewicht gemäß Ladezettel am Wagen manuell nachgetragen. Alternativ kann der Wagen mit einer Vorrichtung zur Messung des Zuladegewichts nach DE 10 2012 013 110 ausgestattet sein, die dann mit dem Borddiagnosegerät verbunden ist. Die Daten einer solchen Vorrichtung werden von dem Borddiagnosegerät mit dem Protokoll der durchgeführten Bremsprobe an den Zentralrechner übermittelt. Sobald die Daten sämtlicher Wagen vorliegen, kann die Website die Bremshundertstel berechnen und dem Lokomotivführer übermitteln.

In einer weiteren Ausgestaltung der Erfindung werden die Daten in der Wagendatenbank des Zentralrechners über die Länge der einzelnen Wagen herangezogen. Mithilfe der GPS Position der Lokomotive und des Zugendes wird aus den GPS Daten die Gesamtlänge des Zuges ermittelt und mit der Summe der Längen der einzelnen Wagen aus der Wagendatenbank verglichen. Damit wird überprüft, ob alle Wagen im Zugverband erfasst wurden.

In dem seltenen Fall, dass zwei nebeneinander im Rangierbahnhof stehende Züge gleichzeitig die automatische Bremsprobe durchführen wollen, besteht die Gefahr, dass jeweils auch Wagen, die sich auf dem Nachbargleis befinden, fälschlicherweise erfasst werden können. Dies wird dadurch vermieden, dass der Lokomotivführer, der als zweiter die Bremsprobe durchführen will, eine Information über die Website erhält, dass im Moment ein Zug auf dem Nachbargleis die Bremsprobe durchführt, und er daher warten muss, bis diese Bremsprobe abgeschlossen ist. Da der Zentralrechner Bremsproben europaweit durchgeführt, werden bei einer für einen Zugverband angeforderte Bremsprüfung nur die Wagenmeldungen zugeordnet und ausgewertet, bei der individuellen Bremsprobe im Umkreis von zum Beispiel 1 km von der Lokomotive abgesetzt werden.

Vorteilhaft wird mit der Erfindung die Bremsprüfung automatisiert und dadurch deutlich verkürzt. Ferner wird automatisch die Reihenfolge der Wagen im Zugverband erfasst. Der Zentralrechner protokolliert die Bremsprobe und Reihenfolge der Wagen im Zugverband. Ferner kann das Verfahren zur Ermittlung der Bremshundertstel automatisiert oder zumindest deutlich vereinfacht werden.

Die Bremsprobe kann zum Beispiel in großen Rangierbahnhöfen auch mithilfe von stationären Bremsprüfständen durchgeführt wird. Ein Prüfer verwendet dazu, wie der Lokführer, ein GPS-fähiges Smartphone. Er teilt über sein Smartphone dem Zentralrechner mit, dass er die Bremsprobe von einem stationären Prüfstand aus durchführen wird. Da sich der Bremsprüfstand in der Nähe des Zuganfangs befindet, ordnet der Zentralrechner den Zug diesem Prüfstand ebenfalls zu. Der Prüfer erhält am Ende der Prüfung über sein Smartphone die Ergebnisse der Prüfung und der Bremsberechnung und kann sie dann ausdrucken und anschließend dem Lokführer übergeben.

Nachfolgend wird ein Ausführungsbeispiel der Erfindung anhand der Zeichnung näher erläutert.

In der Zeichnung zeigen:
- Figur 1: zeigt einen mit einem Zentralrechner kommunizierenden Zugverband;
- Figur 2: zeigt einen Wagen;
- Figur 3: zeigt ein vorgegebenes Bremsmuster.

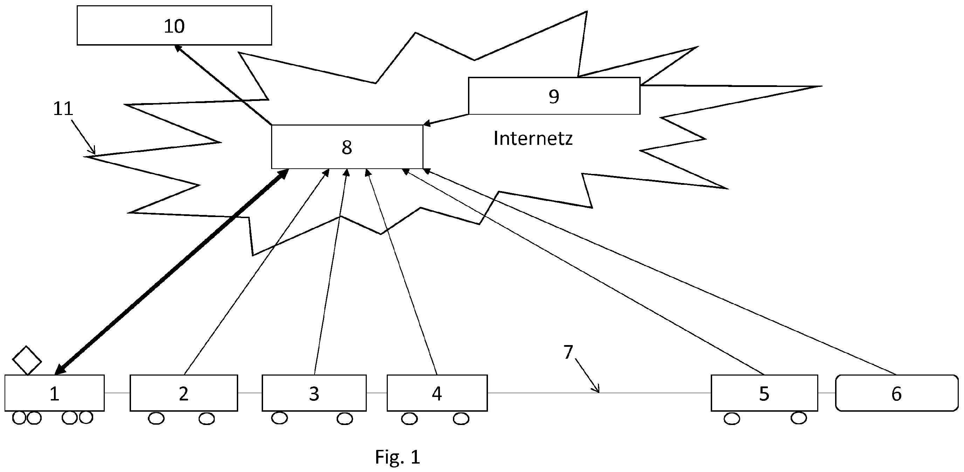

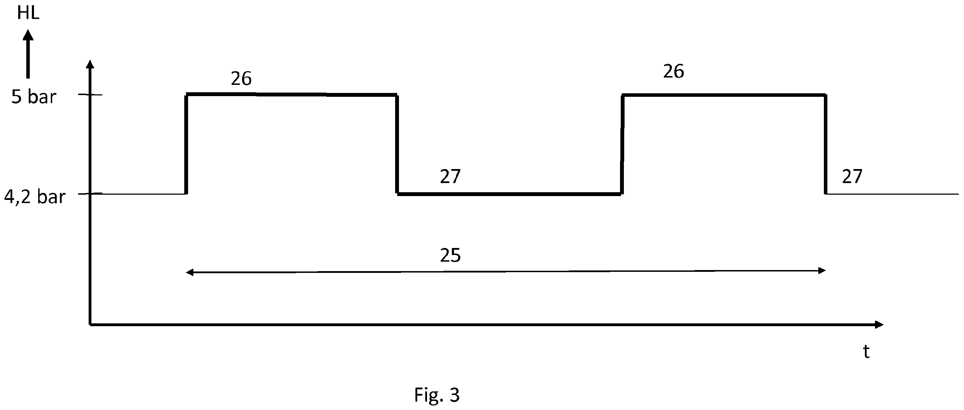

Die Figur 1 zeigt einen Zugverband, der mit einem Zentralrechner 8 kommuniziert. Der Zentralrechner 8 kann zum Beispiel über Internet 11 erreicht werden. Der Zugverband besteht aus einer Lokomotive 1, sowie einer Anzahl von Wagen 2 -5. Am Ende des Zugverbandes ist ein Zugendegerät 6 angeordnet. Die Wagen 2 - 5 sind mit einer von der Lokomotive ausgehenden durchgehenden Hauptluftleitung 7 verbunden. Der Lokomotivführer der Lokomotive 1 interagiert mit einem nicht gezeigten Smartphone mittels einer App mit einem Zentralrechner 8, sobald der Zugverband zusammengestellt ist und der Lokomotivführer eine Bremsprobe durchführen will. Der Zentralrechner übermittelt an den Lokomotivführer das in Figur 3 gezeigte vorgegebene Bremsmuster, mit dem die Hauptluftleitung 7 beaufschlagt wird. In einer Aktivierungsphase 25 wird für einen ersten Zeitraum der Befehl "Bremse lösen" 26 ausgeführt, die Hauptluftleitung 7 mit zum Beispiel 5 bar belegt und damit die Bremsen des Zugverbandes gelöst. Für einen zweiten Zeitraum wird dann der Befehl "Bremse anlegen" 27 ausgeführt, die Hauptluftleitung 7 mit zum Beispiel 4,2 bar belegt und die Bremsen des Zugverbandes betätigt. Für einen dritten Zeitraum wird dann wieder der Befehl "Bremse lösen" 26 ausgeführt und die Bremsen des Zugverbandes gelöst. Nach Abschluss der Aktivierungsphase 25 senden Borddiagnosegeräte der jeweiligen Wagen 2 - 5 ein Protokoll an den Zentralrechner 8. Das Protokoll enthält die ermittelte Position der einzelnen Wagen, die Wagennummer sowie unter anderem Daten über die durchgeführte Bremsprobe, ob der Druck in der Bremszylinderleitung nach Bremsanforderung vorhanden war sowie ob eine vorhandene Feststellbremse gelöst ist. Der Zentralrechner wertet die Meldungen der einzelnen Wagen aus. Mit Hilfe der GPS-Daten kann die Wagenreihung erkannt werden. Der Zentralrechner kann auf eine Wagendatenbank 9 zugreifen, in der die für die einzelnen Wagen spezifischen Größen zur Berechnung des Bremshundertstel hinterlegt sind. Nach Abschluss der Auswertung der Wagenmeldungen sendet der Zentralrechner 8 die Wagenliste mit der Wagenreihung, das ermittelte Bremshundertstel und das Ergebnis der Bremsprobe an das auf der Lokomotive 1 befindliche Smartphone und legt ein Protokoll zentral ab, bzw. sendet sie an eine Kundendatenbank 10, zum Beispiel das Eisenbahnverkehrsunternehmen, das den Zug befördert.

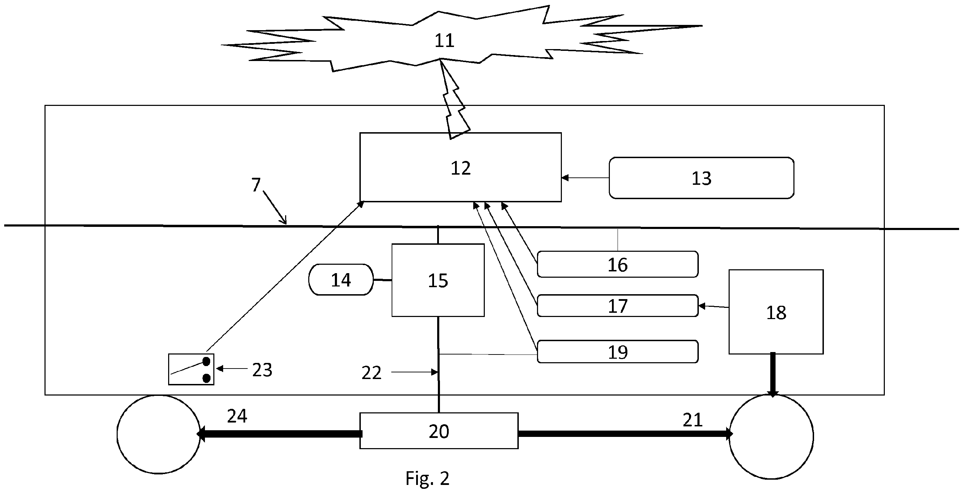

Figur 2 zeigt einen Wagen, der mit den erfindungsgemäßen Komponenten für eine automatische Bremsprüfung ausgestattet ist. Mit der von Zuganfang bis Zugende durchgehenden Hauptluftleitung 7 ist ein Steuerventil 15 verbunden. Mit dem Steuerventil 15 sind ein Luftreservoir 14 sowie über eine Bremsluftleitung 22 ein Bremszylinder 20 verbunden. Erfindungsgemäß wird mittels eines T-Stücks ein erster Drucksensor 16 mit der Hauptluftleitung 7 verbunden. Ein zweiter Drucksensor 19 wird mit der Bremsluftleitung 22 zwischen Steuerventil 15 und Bremszylinder 20 verbunden. Der erste Drucksensor 16 und der zweite Drucksensor 19 sind mit einem Borddiagnosegerät 12 verbunden. Über einen Bremszylinder 20 und Bremsluftleitung 21, 24 werden die Bremsen der Wagen 2-5 betätigt. Im Fall, dass der Wagen eine Feststellbremse 18 besitzt, ist die Feststellbremse 18 mit einem Endlageschalter 17 verbunden. Der Endlageschalter 17 ist ebenfalls mit Borddiagnosegerät 12 verbunden und signalisiert dem Borddiagnosegerät 12 die Stellung der Feststellbremse 18.

Zum Beispiel bei Kesselwagen, die üblicherweise leer oder voll beladen transportiert werden, kann zusätzlich ein manuell zu betätigender Ladezustandsschalter 23 mit einem Sensor ausgestattet vorgesehen werden, der den Zustand "leer" oder "voll beladen" an das Borddiagnosegerät 12 meldet. Bei Wagen, die individuell beladen sind, zum Beispiel Containertragwagen, kann der Wagen mit einem Gewichtserfassung 13 zur Bestimmung des Zuladegewichts ausgestattet sein. Die Gewichtserfassung 13 ist ebenfalls mit dem Borddiagnosegerät 12 verbunden.

Nach Abschluss der Bremsprüfung erstellt das Borddiagnosegerät 12 ein Protokoll aus den von den Drucksensoren 16, 19, gegebenenfalls von einem vorhandenen Endlageschalter 17, Ladezustandsschalter 23 und Gewichtserfassung 13 erhaltenen Daten und übermittelt sie, zusammen mit der Wagennummer und den GPS-Koordinaten des Wagens über das Internet 11 an den Zentralrechner 8.

### Bezugszeichenliste

- 1: Lokomotive
- 2: Wagen
- 3: Wagen
- 4: Wagen
- 5: Wagen
- 6: Zugendegerät
- 7: Hauptluftleitung
- 8: Zentralrechner
- 9: Wagendatenbank
- 10: Kundendatenbank
- 11: Internet
- 12: Borddiagnosegerät
- 13: Gewichtserfassung
- 14: Luftreservoir
- 15: Steuerventil
- 16: Drucksensor
- 17: Endlageschalter
- 18: Feststellbremse
- 19: Drucksensor
- 20: Bremszylinder
- 21: Bremsluftleitung
- 22: Bremsluftleitung
- 23: Ladezustandsschalter
- 24: Bremsluftleitung
- 25: Aktivierungsphase
- 26: Bremse lösen
- 27: Bremse anlegen

## Patentansprüche

1. Verfahren zur automatischen Bremsprüfung eines aus einer Anzahl von miteinander verbundenen Wagen bestehenden Güterzugverbandes, bestehend aus den folgenden Schritten,
- es wird von einem die Bremsprüfung durchführenden Verantwortlichen eine Bremsprüfungsanforderung von einem Zentralrechner (8) angefordert,
- der Zentralrechner (8) ist mit einer Kommunikationseinrichtung ausgestattet,
- der Zentralrechner (8) übermittelt ein Bremsmuster (26, 27) an ein mit einer positionsbestimmenden Ausrüstung versehenes Smartphone,
- nach Vorgaben des Smartphones wird das Bremsmuster (26, 27) von einer Lokomotive (1) aus durchgeführt,
- **dadurch gekennzeichnet, dass**
- Wagen (2 - 5) des Güterzugverbandes mit je einem positionsbestimmenden Borddiagnosegerät (12) ausgestattet sind,
- dass während der Bremsprüfung das Borddiagnosegerät (12) des zugeordneten Wagens (2-5) die Druckverhältnisse einer Hauptluftleitung (7) und einer Bremsluftleitung (22) und, falls vorhanden, die Stellung einer Feststellbremse (18) des Wagens (2-5) überwacht und speichert,
- dass nach Abschluss der Bremsprüfung das Borddiagnosegerät (12) eines jeden Wagens ein vom Borddiagnosegerät (12) erstelltes Protokoll bestehend aus ermittelter Position des Wagens (2 - 5) zusammen mit dem Ergebnis der Bremsprüfung an den Zentralrechner (8) sendet,
- dass der Zentralrechner (8) das Protokoll der einzelnen Wagen (2 - 5) auswertet und mit Hilfe der von den Borddiagnosegeräten (12) übermittelten Positionsdaten der einzelnen Wagen (2-5) die Wagenreihung des Güterzugverbandes ermittelt,
- dass der Zentralrechner (8) das Ergebnis der Bremsprobe und eine Liste die Wagenreihung an das auf die Lokomotive (1) befindliche Smartphone übermittelt.

2. Verfahren nach Anspruch 1, **dadurch gekennzeichnet, dass** der letzte Wagen (5) des Zugverbandes ein Zugendesignal an den Zentralrechner (8) sendet.

3. Verfahren nach Anspruch 2, **dadurch gekennzeichnet, dass**
- das vom Borddiagnosegerät (12) an den Zentralrechner (8) gesendete Protokoll zusätzlich die Wagennummer des Wagens (2-5) enthält,
- dass der Zentralrechner (8) aus einer Wagendatenbank (9) die für die Wagen (2-5) spezifischen Werte abruft und aus diesen Werten die Gesamtlänge des Zuges ermittelt und mit den erhaltenen Positionsdaten vergleicht.

4. Verfahren nach Anspruch 1, **dadurch gekennzeichnet, dass**
- das vom Borddiagnosegerät (12) an den Zentralrechner (8) gesendete Protokoll zusätzlich die Wagennummer des Wagens (2-5) enthält,
- dass der Zentralrechner (8) aus einer Wagendatenbank (9) die für die Wagen (2-5) spezifischen Werte abruft und aus diesen Werten ein Bremshundertstel des Zugverbandes ermittelt,
- dass der Zentralrechner (8) das Bremshundertstel des Zugverbandes an das auf der Lokomotive (1) befindliche Smartphone übermittelt.

5. Verfahren nach Anspruch 1, **dadurch gekennzeichnet, dass** das Borddiagnosegerät (12) die Geschwindigkeit des Wagens 0 km/h detektiert und nur bei der Geschwindigkeit 0 km/h Daten an den Zentralrechner (8) sendet.

6. Verfahren nach Anspruch 4, **dadurch gekennzeichnet, dass** das Protokoll des Borddiagnosegeräts (12) Daten über den Ladezustand des Wagens (2-5) enthält, die vom Zentralrechner (8) mit der in der Wagendatenbank (9) enthaltenen wagenspezifischen Daten zur Ermittlung des Bremshundertstel herangezogen werden.

7. Wagen zur Durchführung eines Verfahrens nach einem der Ansprüche 1 - 6, **dadurch gekennzeichnet, dass** der Wagen (2-5) ein Borddiagnosegerät (12) aufweist, dass das Borddiagnosegerät (12) verbunden ist mit und Daten erhält von:
- einem Drucksensor (16) zur Überwachung des Drucks in einer Hauptluftleitung (7),
- einem Drucksensor (19) zur Überwachung des Drucks in einer Bremsluftleitung (22),
- bei Wagen (2-5) mit einer Feststellbremse (18) einen Endlageschalter (17),
dass das Borddiagnosegerät (12) eine positionsbestimmende Ausrüstung aufweist und dass das Borddiagnosegerät (12) eine Sendeinrichtung zur Übermittlung von einem Protokoll an den Zentralrechner (8) enthält.

8. Wagen nach Anspruch 7, **dadurch gekennzeichnet, dass** das Borddiagnosegerät (12) verbunden ist und Daten erhält von einem Ladezustandsschalter (23).

9. Wagen nach Anspruch 7, **dadurch gekennzeichnet, dass** das Borddiagnosegerät (12) Mittel enthält, die das Borddiagnosegerät (12) als Zugendegerät (6) kennzeichnen.

## Claims

1. Method for automatically testing the brakes of a goods block train composed of a number of wagons connected to one another, comprising the following steps:
- a brake test request is requested by a central computer (8) by a responsible person carrying out the brake test,
- the central computer (8) is equipped with a communication device,
- the central computer (8) transmits a braking pattern (26, 27) to a smart phone which is provided with position-determining equipment,
- the braking pattern (26, 27) is carried out from a locomotive (1) in accordance with the specification of the smart phone,
- **characterized in that**
- wagons (2 - 5) of the goods block train are each equipped with an on-board diagnostic device (12) which determines position,
- **in that** during the testing of the brakes the on-board diagnostic device (12) of the assigned wagon (2-5) monitors and stores the pressure conditions of a main air line (7) and of a brake air line (22) and, if present, the position of a parking brake (18) of the wagon (2-5),
- **in that** after the conclusion of the testing of the brakes the on-board diagnostic device (12) of each wagon transmits a log, produced by the on-board diagnostic device (12) and composed of the identified position of the wagon (2-5) together with the result of the testing of the brakes to the central computer (8),
- **in that** the central computer (8) evaluates the log of the individual wagons (2 - 5) and identifies the wagon order of the goods block train using the position data, communicated the on-board diagnostic devices (12), of the individual wagons (2 - 5),
- **in that** the central computer (8) communicates the result of the braking test and a list of the wagon order to the smart phone which is located in the locomotive (1).

2. Method according to Claim 1, **characterized in that** the last wagon (5) of the block train transmits a train end signal to the central computer (8).

3. Method according to Claim 2, **characterized in that**
- the log which is transmitted by the on-board diagnostic device (12) to the central computer (8) additionally contains the wagon number of the wagon (2-5),
- **in that** the central computer (8) retrieves, from a wagon data base (9), the values which are specific for the wagons (2-5), and identifies the overall length of the train from these values, and compares said length with the obtained position data.

4. Method according to Claim 1, **characterized in that**
- the log which is transmitted by the on-board diagnostic device (12) of the central computer (8) additionally contains the wagon number of the wagon (2-5),
- **in that** the central computer (8) retrieves, from a wagon data base (9), the values which are specific for the wagons (2-5) and identifies a braking percent of the block train,
- **in that** the central computer (8) communicates the braking percent of the block train to the smart phone which is located in the locomotive (1).

5. Method according to Claim 1, **characterized in that** the on-board diagnostic device (12) detects the speed of the wagon 0 km/h and transmits data to the central computer (8) only at the speeds 0 km/h.

6. Method according to Claim 4, **characterized in that** the log of the on-board diagnostic device (12) contains data about the load state of the wagon (2-5), which data are used by the central computer (8), with the wagon-specific data contained in the wagon data base (9), to ascertain the braking percent.

7. Wagon for carrying out a method according to one of Claims 1-6, **characterized in that** the wagon (2-5) has an on-board diagnostic device (12), **in that** the on-board diagnostic device (12) is connected to an receives data from:
- a pressure sensor (16) for monitoring the pressure in a main air line (7),
- a pressure sensor (19) for monitoring the pressure in a brake air line (22), and
- an end position switch (17) in the case of wagons (2-5) with a parking brake (18),
**in that** the on-board diagnostic device (12) has position-determining equipment, and **in that** the on-board diagnostic device (12) contains a transmitter device for communicating a log to the central computer (8).

8. Wagon according to Claim 7, **characterized in that** the on-board diagnostic device (12) is connected to and receives data from a load state switch (23).

9. Wagon according to Claim 7, **characterized in that** the on-board diagnostic device (12) contains means which characterize the on-board diagnostic device (12) as a train end device (6).

## Revendications

1. Procédé d'essai de freinage automatique d'un assemblage de train de marchandises composé d'un certain nombre de wagons reliés les uns aux autres, comprenant les étapes suivantes :
- une demande d'essai de freinage est exigée par un ordinateur central (8) de la part d'un responsable qui réalise l'essai de freinage,
- l'ordinateur central (8) est équipé d'un dispositif de communication,
- l'ordinateur central (8) communique un modèle de freinage (26, 27) à un smartphone pourvu d'un équipement de détermination de position,
- le modèle de freinage (26, 27) est exécuté depuis une locomotive (1) d'après les indications du smartphone,
- **caractérisé en ce que**
- les wagons (2 à 5) de l'assemblage de train de marchandises sont respectivement équipés d'un appareil de diagnostic embarqué (12) déterminant la position,
- **en ce que** pendant l'essai de freinage, l'appareil de diagnostic embarqué (12) du wagon (2 à 5) associé surveille et mémorise les rapports de pression d'une conduite pneumatique principale (7) et d'une conduite pneumatique de frein (22) et, si présent, la position d'un frein d'immobilisation (18) du wagon (2 à 5),
- **en ce qu'**après avoir terminé l'essai de freinage, l'appareil de diagnostic embarqué (12) de chaque wagon envoie à l'ordinateur central (8) un compte-rendu établi par l'appareil de diagnostic embarqué (12), constitué de la position déterminée du wagon (2 à 5) conjointement avec le résultat de l'essai de freinage,
- **en ce que** l'ordinateur central (8) interprète le compte-rendu des wagons (2 à 5) individuels et, à l'aide des données de position des wagons (2 à 5) individuels communiquées par l'appareil de diagnostic embarqué (12), identifie la séquence des wagons de l'assemblage de train de marchandises,
- **en ce que** l'ordinateur central (8) communique le résultat de l'essai de freinage et une liste de la séquence des wagons au smartphone qui se trouve sur la locomotive (1).

2. Procédé selon la revendication 1, **caractérisé en ce que** le dernier wagon (5) de l'assemblage de train envoie un signal de fin de train à l'ordinateur central (8).

3. Procédé selon la revendication 2, **caractérisé en ce que**
- le compte-rendu envoyé à l'ordinateur central (8) par l'appareil de diagnostic embarqué (12) contient en plus le numéro de wagon du wagon (2 à 5),
- **en ce que** l'ordinateur central (8) interroge les valeurs spécifiques pour le wagon (2 à 5) auprès d'une base de données de wagon (9) et, à partir de ces valeurs, identifie la longueur totale du train et la compare aux données de position obtenues.

4. Procédé selon la revendication 1, **caractérisé en ce que**
- le compte-rendu envoyé à l'ordinateur central (8) par l'appareil de diagnostic embarqué (12) contient en plus le numéro de wagon du wagon (2 à 5),
- **en ce que** l'ordinateur central (8) interroge les valeurs spécifiques pour le wagon (2 à 5) auprès d'une base de données de wagon (9) et, à partir de ces valeurs, identifie un centième de freinage de l'assemblage de train,
- **en ce que** l'ordinateur central (8) communique le centième de freinage de l'assemblage de train au Smartphone qui se trouve sur la locomotive (1).

5. Procédé selon la revendication 1, **caractérisé en ce que** l'appareil de diagnostic embarqué (12) détecte la vitesse du wagon de 0 km/h et n'envoie des données à l'ordinateur central (8) qu'à la vitesse de 0 km/h.

6. Procédé selon la revendication 4, **caractérisé en ce que** le compte-rendu de l'appareil de diagnostic embarqué (12) contient des données à propos de l'état de charge du wagon (2 à 5), lesquelles ont été utilisées par l'ordinateur central (8) avec les données spécifiques au wagon contenues dans la base de données de wagon (9) en vue d'identifier le centième de freinage.

7. Wagon destiné à mettre en oeuvre le procédé selon l'une des revendications 1 à 6, **caractérisé en ce que** le wagon (2 à 5) possède un appareil de diagnostic embarqué (12), **en ce que** l'appareil de diagnostic embarqué (12) est connecté à et obtient des données de la part de :
- un capteur de pression (16) destiné à surveiller la pression dans une conduite pneumatique principale (7),
- un capteur de pression (19) destiné à surveiller la pression dans une conduite pneumatique de frein (22),
- un commutateur de fin de course (17) sur les wagons (2 à 5) équipés d'un frein d'immobilisation (18),
**en ce que** l'appareil de diagnostic embarqué (12) possède un équipement de détermination de position et **en ce que** l'appareil de diagnostic embarqué (12) contient un dispositif d'émission servant à communiquer un compte-rendu à l'ordinateur central (8).

8. Wagon selon la revendication 7, **caractérisé en ce que** l'appareil de diagnostic embarqué (12) est connecté à un commutateur d'état de chargement (23) et obtient des données de la part de celui-ci.

9. Wagon selon la revendication 7, **caractérisé en ce que** l'appareil de diagnostic embarqué (12) contient des moyens qui identifient l'appareil de diagnostic embarqué (12) en tant qu'appareil de fin de train (6).
